**Europäisches Patentamt**

**European Patent Office**

**Office européen des brevets**

(11) Veröffentlichungsnummer: **0 467 195 A1**

# EUROPÄISCHE PATENTANMELDUNG

(21) Anmeldenummer: **91111381.9**

(22) Anmeldetag: **09.07.91**

(51) Int. Cl.⁵: **B60D 1/52**

(30) Priorität: **18.07.90 DE 4022764**

(43) Veröffentlichungstag der Anmeldung:
**22.01.92 Patentblatt 92/04**

(84) Benannte Vertragsstaaten:
**AT BE CH DE FR GB IT LI NL SE**

(71) Anmelder: **PEKA-Fahrzeugbau GmbH & Co.
KG
Rheinstrasse 116
W-7500 Karlsruhe 21(DE)**

(72) Erfinder: **Jaworowski, Hans-Jürgen, Dipl.-Ing.
Ziegeldobel 4a
W-7746 Hornberg(DE)
Erfinder: Rimmelspacher, Bernhard, Dipl.-Ing.
Gartenstrasse 11
W-7512 Rheinstetten(DE)
Erfinder: Ciescholka, Georg
Herderstrasse 11
W-7500 Karlsruhe(DE)
Erfinder: Jais, Jürgen
Albert-Braunstrasse 20 a
W-7500 Karlsruhe(DE)**

(74) Vertreter: **Schnabel, Hartmut, Dr.-Ing.
Am Feldrain 13
W-6940 Weinheim(DE)**

(54) **Abnehmbare Anhängerkupplung.**

(57) Abnehmbare Anhängerkupplung zur lösbaren Befestigung des Schaftes einer mit Kupplungskugel versehenen Kugelstange am Fahrzeugheck, insbesondere für Personenkraftwagen. Kugelstange und -Schaft weisen Ausnehmungen auf zur Aufnahme verschiedener Arretierglieder einschließlich einer längs im Schaft (12) geführten federbelasteten Schubstange (18) mit quer zum Schaft (12) verlaufenden Lager- und Arretierflächen. An dem Schaft (12) ist endseitig im Bereich einer Ausnehmung (16) ein Drehkeil (22) angebracht, der mittels einer pleuelartigen Verbindung (20) zur Schubstange (18) durch diese verschwenkbar ist zur Verkeilung des Schaftes (12) zwischen zwei sich etwa gegenüberliegenden Querbolzen o. dgl. (31,32).

FIG. 1

Die Erfindung betrifft eine abnehmbare Anhängerkupplung, insbes. für Personenkraftwagen, mit am Fahrzeugheck bevorzugt verdeckt zu montierendem Halteteil für die lösbare Befestigung des Schaftes einer mit Kupplungskugel versehenen Kugelstange, wobei Kugelstange und -Schaft Ausnehmungen aufweisen zur Aufnahme weiterer Arretierglieder einschließlich einer längs im Schaft geführten federbelasteten Schubstange, mit quer zum Schaft verlaufenden Lager- und Arretierflächen, die in Verbindung mit entsprechenden Gegenflächen des Halteteils eine vorwiegend formschlüssige Arretierung des Schaftes im Halteteil in Betriebsposition bewirken.

Eine derartige Anhängerkupplung ist aus der deutschen Gebrauchsmusterschrift 8 716 502 und der EP-Patentschrift 0 223 996 bekanntgeworden. Bei Anhängerkupplungen der vorbeschriebenen Art (mit einer Auflauframpe von verhältnismäßig großem Radius) kann unter ungünstigen Umständen ein labiler Verriegelungszustand infolge undefinierter Zwischenposition des Schaftes eintreten.

Einer Anhängerkupplung, wie sie in der deutschen Gebrauchsmusterschrift 8 813 812 beschrieben ist, haftet zwar dieser Nachteil nicht mehr an, die Position ist in jedem Falle definiert, aber die Verspannung des wiederum zentrisch im Schaft verlaufenden Keilschiebers gegenüber der sogenannten Rastfläche, die mit sehr engem Radius in die Rampenfläche übergeht, kann zu wiederholten Kantenpressungen in der sogenannten Auflauffläche des Keilschiebers führen. Dies wiederum könnte im Laufe der Zeit bei sehr hohen Belastungen zu Problemen führen.

Der Erfindung liegt daher die Aufgabe zugrunde, den Stand der Technik entsprechend zu verbessern und nicht nur jedwede Möglichkeit eines labilen, ungesicherten Verriegelungszustandes auszuschließen, sondern den Sitz der Kugelstange noch weiter zu verbessern, indem eine andere geometrische Anordnung der Anlage- und Spannflächen vorgenommen wird, die Kantenpressung oder andere Deformationen ausschließt.

Die Lösung dieser Aufgabe erfolgt bei einer Anhängerkupplung der eingangs genannten Art durch einen endseitig im Bereich einer Ausnehmung des Schaftes an diesem angebrachten Drehkeil, der mittels einer pleuelartigen Verbindung zur Schubstange durch diese verschwenkbar ist zur Verkeilung des Schaftes zwischen zwei sich etwa gegenüberliegenden Querbolzen o. dgl.

Bei einer bevorzugten Ausführungsform besteht das Halteteil im wesentlichen aus zwei Seitenwangen, welche durch zwei Querbolzen durch Schweißung miteinander verbunden sind, wobei Höhen- und Längsabstand der beiden Bolzen auf die korrespondierenden Arretier- und Keilflächen des Schaftes abgestimmt sind. Dabei korrespondiert mit dem einen dieser Bolzen eine durch eine Vertiefung im oder eine Erhöhung am Schaft gebildete Nase bzw. Nocke, die wiederum quer zur Längsachse des Schaftes verläuft und diesen Bolzen in Betriebsstellung hintergreift.

Weitere vorteilhafte Ausführungsformen sind in Unteransprüchen gekennzeichnet.

Im Folgenden wird die Erfindung anhand eines Ausführungsbeispieles näher erläutert, aus dem sich weitere Merkmale und Vorteile der Erfindung entnehmen lassen. In der zugehörigen Zeichnung zeigt

Fig. 1 eine erfindungsgemäße Anhängerkupplung in Betriebs- bzw. Arretierungsposition, als im wesentlichen vertikal und achsmittig verlaufenden Längsschnitt;

Fig. 2 dieselbe Ausführungsform in Entnahme- bzw. Einschubposition;

Fig. 3 dieselbe Ausführungsform ohne Halteteil in einer stirnseitigen Draufsicht.

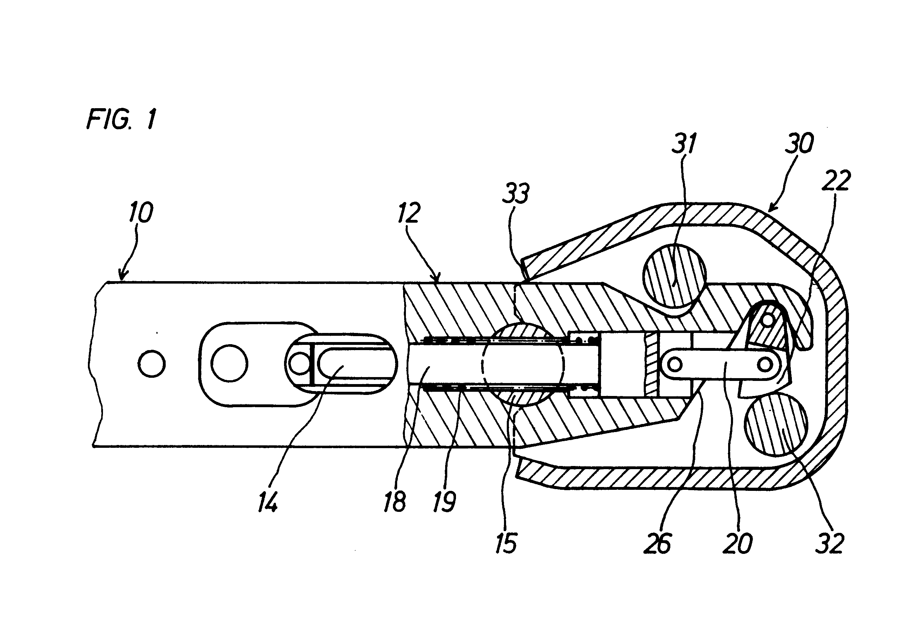

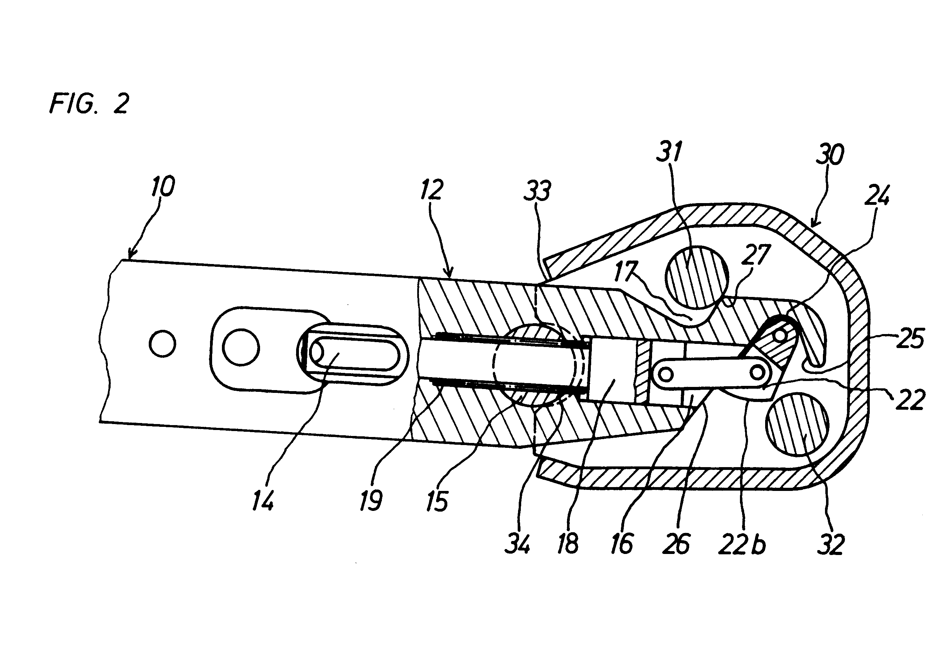

Für alle drei Figuren gelten übereinstimmende Bezugszeichen. Im Falle der Figuren 1 und 2 geht die Kugelstange 10 in den bevorzugt viereckig ausgebildeten Kugelstangenschaft 12 über, der in dem vom Halteteil weiter entfernten Bereich als Seitenansicht dargestellt ist. Beziffert ist dort lediglich das Langloch 14 für den Lösehebel der seitlich am Schaft angebrachten Entriegelungseinrichtung. (Vgl. dazu die schon genannte Gebrauchsmusterschrift 8 716 502. Die Verwendung der dort beschriebenen Einrichtung in Kombination mit dem ebenfalls dort beschriebenen zusätzlichen Sperrelement empfiehlt sich). In Höhe des ebenfalls aus der vorgenannten Gebrauchsmusterschrift bekannten Anschlagbolzens 15 der mit der stirnseitigen Anschlagfläche 34 des Halteteils 30 korrespondiert, tritt der Schaft 12 in das Halteteil 30 ein. Er besitzt eine durch eine Vertiefung 17 gebildete Arretierungsnase 27, die in Betriebsposition den Arretierungsbolzen 31 hintergreift. Der mit rechteckigem Querschnitt versehene Schaft 12 enthält als Ausnehmung eine axial oder evtl. geneigt verlaufende langgestreckte Bohrung 16 (vgl. Fig. 2), in der eine Schubstange 18 verschiebbar gelagert ist. Dabei ist die Schubstange 18 zumindest bereichsweise von der Feder 19 spiralig umgeben und wird von dieser in Richtung Hülse bzw. Arretierposition gedrückt.

Die Schubstange 18 kann ein- oder - wie gezeigt - zweiteilig ausgebildet sein, wobei das endseitige Teil über eine Pleuelstange 20 mit dem Drehkeil 22 verbunden ist. Die jeweils gelenkige Anbringung der Pleuelstange 20 ermöglicht die Umsetzung der axialen Bewegung der Schubstange 18 in eine Schwenkbewegung des Drehkeils 22. Dieser ist in einer quer zur Schaftachse verlaufenden Schaft-Vertiefung 24 schwenkbeweglich gelagert, die endseitig in einen Vorsprung des Schaftes übergeht, dessen Innenfläche als Sperranschlag 25 zur Begrenzung der Schwenkbewegung des Drehkeils 22 dient. Auf der anderen Seite ist die Schwenkung des Drehkeils 22 durch die von der Anschrägung 26 des Kugelstangenschaftes 12 gebildete Fläche begrenzt.

Das Halteteil 30 weist zwei Seitenwangen 33 auf, welche durch zwei Querbolzen 31, 32 miteinander durch Schweissung verbunden sind. Die Stirnseiten der Seitenwangen bilden die Anschlagflächen 34. Um die notwendige Seitensteifigkeit zu erreichen, ist im Regelfall ein Boden- und Deckblech vorzusehen. Im Falle der Zeichnung ist das Halteteil 30 mit einem ringsumlaufenden Versteifungsblech verschweißt, wobei lediglich die Öffnung zum Einschieben der Kugelstange frei bleibt.

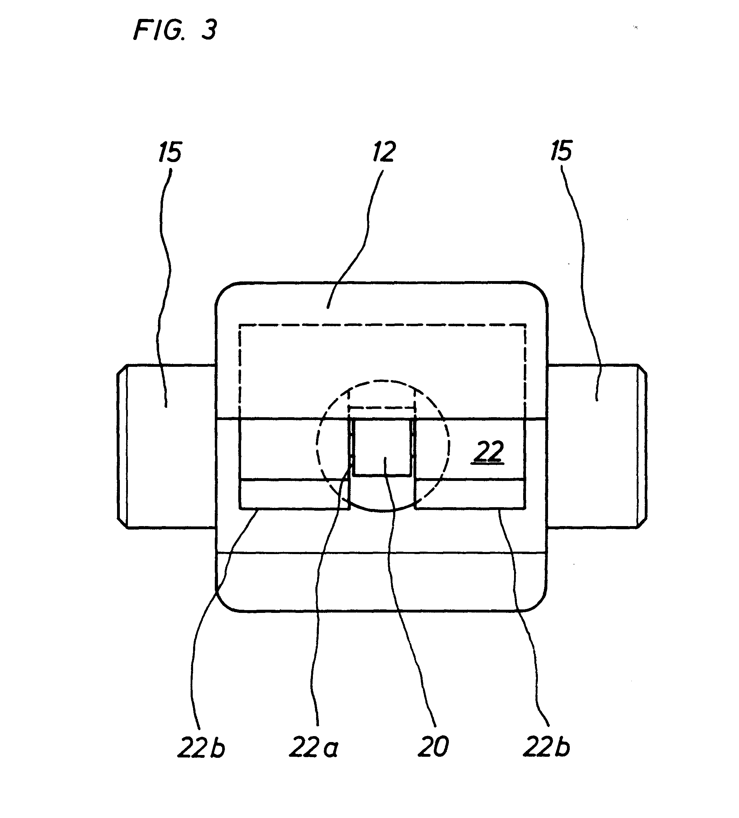

Fig. 3 zeigt den Schaft in der stirnseitigen Draufsicht. Im Vordergrund sieht man oben den endseitigen Schaftvorsprung, der den Sperranschlag 25 für den Keil 22 bildet. Der Keil 22 weist die Nut 22a auf, innerhalb der das Ende der Pleuelstange 20 zu sehen ist. Im Hintergrund verlaufen links und rechts die am Schaft 12 befindlichen Anschlagsbolzen 15, durch deren Anschlag die Einschubtiefe des Schaftes 12 in das Halteteil 30 definiert ist.

Die Entarretierung und Entnahme der Kugelstange 10 aus dem Halteteil 30 läuft nun folgendermaßen ab: Zunächst wird die nicht gezeigte Entriegelungsvorrichtung entklinkt und der mit dem Langloch 14 korrespondierende Lösehebel betätigt, was gegen die Kraft der Feder 19 eine Bewegung der Schubstange 18 nach links im Bild bewirkt. Die Schubstange 18 nimmt über die Pleuelstange 20 den Drehkeil 22 mit, dessen Keilfläche 22b auf dem das Widerlager zum Arretierungsbolzen 31 bildenden Bolzen 32 abgleitet, in die in Fig. 2 gezeigte Entnahmeposition. Denn nunmehr läßt sich die Kugelstange ausreichend nach oben neigen, um die Arretierungsnase 27 am Arretierungsbolzen 31 vorbeizuführen und die Kugelstange 10 zu entnehmen.

Als Bolzen 30, 31 eignen sich insbesondere Rundbolzen aus hochfestem Stahl mit einem Durchmesser von 12 bis 20 mm, vorzugsweise etwa 15 mm. Es sind aber auch Bolzen mit anderen Profilen und Querkörper anderer Art möglich.

Bei richtiger Gestaltung der Arretierungs- bzw. Anlageflächen, wozu im Falle der Arretierungsnase 27 eine geringfügige Verrundung ausreicht, und ansonsten die annähernd aus der Zeichnung ersichtliche Gestaltung von Keil 22 und Bolzen 31,32, ist eine sehr sichere, definierte und mangels Kantenpressung zeitstandfeste Ausführung gewährleistet.

| 10 | Kugelstange |
| 12 | Kugelstangenschaft (Schaft) |
| 14 | Langloch für Lösehebel |
| 15 | Anschlagbolzen |
| 16 | Bohrung im Schaft |
| 17 | Vertiefung im Schaft |
| 18 | Schubstange |
| 19 | Spiralfeder |
| 20 | Pleuelstange |
| 22 | Drehkeil |
| 22a | Nut |
| 22b | Keilfläche |
| 24 | Vertiefung |
| 25 | Sperranschlag |
| 26 | Anschrägung |
| 27 | Arretierungsnase |
| 30 | Halteteil |
| 31 | (Arretierungs-) Bolzen |
| 32 | (Widerlager-) Bolzen |
| 33 | Seitenwangen |
| 34 | Anschlagfläche |

**Patentansprüche**

1. Abnehmbare Anhängerkupplung, insbes. für Personenkraftwagen, mit am Fahrzeugheck bevorzugt verdeckt zu montierendem Halteteil (30) für die lösbare Befestigung des Schaftes (12) einer mit Kupplungskugel versehenen Kugelstange (10), wobei Kugelstange und -Schaft Ausnehmungen (14,16,17,) aufweisen zur Aufnahme weiterer Arretierglieder einschließlich einer längs im Schaft (12) geführten federbelasteten Schubstange (18), mit quer zum Schaft (12) verlaufenden Lager- und Arretierflächen, die in Verbindung mit entsprechenden Gegenflächen des Halteteils (30) eine Arretierung des Schaftes (12) im Halteteil (30) in Betriebsposition bewirken, gekennzeichnet durch einen endseitig im Bereich einer Ausnehmung (16) des Schaftes (12) an diesem angebrachten Drehkeil (22), der mittels einer pleuelartigen Verbindung (20) zur Schubstange (18) durch diese verschwenkbar ist zur Verkeilung des Schaftes (12) zwischen zwei sich etwa gegenüberliegenden Querbolzen o. dgl. (31,32).

2. Anhängerkupplung nach Anspruch 1, dadurch gekennzeichnet, daß das Halteteil (30) im wesentlichen aus zwei Seitenwangen (33) aus Stahl besteht, welche durch zwei Querbolzen (30,31) vorzugsweise durch Schweißung miteinander verbunden sind, wobei Höhen- und Längsabstand der beiden Bolzen (30,31) auf die korrespondierenden Keil- und Arretierflächen (22b,27) des Schaftes (12) abgestimmt sind.

3. Anhängerkupplung nach Anspruch 1 oder 2, dadurch gekennzeichnet, daß mit dem Arretierungs-Bolzen (31) eine entsprechende, durch eine Vertiefung (17) oder eine Erhöhung gebildete Arretierungs-Nase (27) bzw. -Nocke am Schaft formschlüssig korrespondiert.

4.  Anhängerkupplung nach einem der vorangehenden Ansprüche, dadurch gekennzeichnet, daß die hülsenseitig angebrachten, quer zum Schaft verlaufenden Bolzen (30,31) einen runden Querschnitt von vorzugsweise 12 bis 20 mm Durchmesser aufweisen.

5.  Anhängerkupplung nach einem der vorangehenden Ansprüche, dadurch gekennzeichnet, daß der Schaft (12) einen viereckigen Querschnitt aufweist mit endseitiger Anschrägung (26) als Freiraum für den Drehkeil (22).

6.  Anhängerkupplung nach einem der vorangehenden Ansprüche, dadurch gekennzeichnet, daß die Seitenwangen (33) des Halteteils direkt mit dem Grundkörper der Anhängevorrichtung verbindbar sind, insbesondere durch Schweissen.

7.  Anhängerkupplung nach einem der vorangehenden Ansprüche, dadurch gekennzeichnet, daß die Unterseite des Drehkeils (22) in Form eines Kreisbogens gekrümmt ist und dessen Mittelpunkt außerhalb der Drehachse in Richtung Schubstange (18) verschoben ist.

8.  Anhängerkupplung nach Anspruch 7, dadurch gekennzeichnet, daß der Krümmungsradius der Unterseite etwa 10 bis 25 mm beträgt.

9.  Anhängerkupplung nach einem der vorangehenden Ansprüche, dadurch gekennzeichnet, daß der Drehkeil (22) sich fast über die gesamte Breite des viereckig ausgebildeten Schaftes (12) erstreckt und im Bereich seiner mittig angeordneten Nut (22a) über eine dort gelenkig gelagerte Pleuelstange (20) mit der Schubstange (18) verbunden ist.

10. Anhängerkupplung nach einem der vorangehenden Ansprüche, dadurch gekennzeichnet, daß der Schaft (12) endseitig zur schwenkbeweglichen Lagerung des der Keilfläche (22b) gegenüberliegenden Keil-Kopfes quer zur Schaft-Längsachse eine Vertiefung (24) mit kreisbogenähnlichem Querschnitt aufweist.

11. Anhängerkupplung nach Anspruch 10, dadurch gekennzeichnet, daß die Vertiefung (24) endseitig in einen Vorsprung des Schaftes übergeht, dessen Innenfläche als Sperranschlag (25) zur Begrenzung der Schwenkbewegung des Drehkeils (22) dient.

FIG. 1

EP 0 467 195 A1

FIG. 2

EP 0 467 195 A1

FIG. 3

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 122 961  (RIEHLE)<br>* Zusammenfassung * * Seite 2, Spalte 1, Zeile 29 - Seite 3, Spalte 1, Zeile 5; Abbildungen *<br>– – – | 1,3-4 | B 60 D 1/52 |
| A | DE-A-3 317 453  (DAIMLER-BENZ)<br>* Zusammenfassung * * Seite 6, Zeile 3 - Seite 8, Zeile 23; Abbildungen *<br>– – – | 1,3-4 | |
| A,D | EP-A-0 223 996  (DICKMANN)<br>* das ganze Dokument *<br>– – – | 1 | |
| A | DE-A-3 541 904  (DAIMLER-BENZ)<br>* Zusammenfassung * * Spalte 3, Zeile 22 - Zeile 41; Abbildung *<br>– – – – – | 1 | |

| | | | RECHERCHIERTE SACHGEBIETE (Int. Cl.5) |
|---|---|---|---|
| | | | B 60 D<br>B 66 C |

**Der vorliegende Recherchenbericht wurde für alle Patentansprüche erstellt**

| Recherchenort | Abschlußdatum der Recherche | Prüfer |
|---|---|---|
| Den Haag | 17 Oktober 91 | GONZALEZ GRANDA C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------------
& : Mitglied der gleichen Patentfamilie, übereinstimmendes Dokument